# EUROPEAN PATENT APPLICATION

(11) **EP 2 324 719 A1**
(43) Date of publication of application: **25.05.2011**
(21) Application number: 09809735.5
(22) Date of filing: 28.07.2009
(51) Int. Cl.: A23L 1/212, A23B 7/04

(54) **METHOD FOR PRODUCING FROZEN VEGETABLE FOOD MATERIAL HAVING SOFT TEXTURE**

(30) Priority: 27.08.2008 JP 2008218252
(71) Applicant: Mishima Foods Co., Ltd., Hiroshima-Shi Hiroshima 730-8661 (JP)
(72) Inventor: BABA Kenji, Hiroshima-shi Hiroshima 731-0103 (JP); UESHIMO Koji, Aki-gun Hiroshima 736-0022 (JP); TAKA Nobuko, Hiroshima-shi Hiroshima 733-0844 (JP); TAKEI Tsuneo, Aki-gun Hiroshima 736-0001 (JP)
(86) International application number: PCT/JP2009/063419
(87) International publication number: WO 2010/024081

(57) **Abstract**

Provided is a method for producing a frozen soft vegetable food material which is suitable as a food for the aged, whose original shape is not damaged even in the circulation process, which has uniform softness even in the interior thereof and which can maintain its original shape.

The method comprises steps of: (1) a step for freezing a vegetable food ingredient and then thawing the food ingredient to thus form a thawed food ingredient; (2) a step for immersing the thawed food ingredient in a dispersion containing a pectin-decomposition enzyme or a cellulose-decomposition enzyme under reduced pressure to form an enzyme-processed vegetable food ingredient; (3) a step for removing the enzyme-processed vegetable food ingredient from the enzyme-containing dispersion; (4) a step for subjecting the enzyme-processed vegetable food ingredient separated in the preceding step to a low temperature processing carried out at a temperature ranging from 0 to 10°C for 8 to 24 hours to thus prepare a low temperature processed vegetable food ingredient; (5) a step for heating the low temperature-processed vegetable food ingredient at a temperature and for a time sufficient to inactivate the foregoing pectin-decomposition enzyme or the cellulose-decomposition enzyme; and (6) a step for freezing the heat-treated vegetable food ingredient. Moreover, the thawing treatment in the foregoing step (1) may be carried out simultaneously with the enzyme-impregnation treatment carried out under reduced pressure in the subsequent step.

## Description

### Technical Field

The present invention relates to a method for the production of a soft vegetable food material which has a soft texture, which can suitably be used for the preparation of foodstuffs for the aged and which can maintain the shape peculiar to the original food material.

### Background Art

It would in general be difficult for the aged to eat hard food materials. Moreover, the aged in general has such a strong demand that when taking a meal, he also enjoys, like the usual people, the shapes and colors of the food materials used in dishes, at the table, in addition to the taste thereof.
Under the existing circumstances, however, it is one of the leading mainstreams that the meals for the aged are prepared in the paste-like or liquid-like forms, in which all of the ingredients thereof have been softened even to such an extent that the ingredients have almost lost their original shapes while taking into consideration the convenience of the aged such that he can easily eat the same. Therefore, it is common that when the aged is at table, he cannot satisfactorily enjoy the shapes and colors of the food materials or the ingredients of a meal and accordingly, such a meal would be enjoyable for the aged. For this reason, it is rarely the case that the meals for the aged can stimulate the aged person's appetite and accordingly, this would exert a variety of evil influences on the aged such as the gradual decrease in their physical strengths. Moreover, if such ingredients are cooked even to such an extent that they are in the paste-like or liquid-like states, it would be quite difficult, for the aged, to enjoy the colors of a meal provided by the food materials thereof.
Furthermore, it would be quite desirable for the aged that he can commercially easily obtain, at home, soft food materials obtained by preliminarily having softened hard food materials in order that the aged, by himself, can easily prepare the meal for the aged in his own house.
There has recently been known a method for preparing a food material which is softened even to the interior or further to the center thereof, which comprises the steps of freezing a raw or preheat-treated food material, thawing the frozen food material, and then immersing the material in a dispersion of a pectin-decomposition enzyme under reduced pressure to thus make the pectin-decomposition enzyme penetrate even into the center of the material (see, for instance, Patent Document 1).

This rapid enzyme-introduction method can make the enzyme penetrate into the central portion of a food material and therefore, it would be expected that not only the superficial portion, but also the central portion of a food material can uniformly be processed (for instance, the softening of the material) within a very short period of time.
In the meantime, the inventors of this invention have tried to prepare a food material according to this rapid enzyme-introduction method, packing the same in a container as it is, then storing it in a refrigerator and finally putting it on the market as a softened food material. In such case, however, the inventors have found that the food material thus treated suffers from the following problems: The food material is inevitably and gradually further softened in the course of its circulation; the material is too soft at the time of cooking the same or even hard food material such as bamboo shoot or carrot is softened to such an extent that the shape can immediately be damaged. Alternatively, it would also be tried to put the food material into a container as it is and to subsequently freeze the food material therein, but the softening of the material may proceed to some extent even in this case. Moreover, the food material in such a condition should be thawed prior to the cooking of the same. However, this is quite inconvenient for the aged since such an operation requires much time.
For this reason, it would be quite convenient for the aged that a food material, in which any softening of the material never proceeds and which is in a softened condition while maintaining the original shape and color peculiar to the material, can be cooked without any additional treatment and this would be quite important to make the life of the aged comfortable and plentiful.

The applicant of this patent application conducted intensive studies to develop a food material suitably used for the preparation of a meal for the aged, which is prepared by an enzyme-treatment like that described above, which can maintain a fixed and desired softness, even on the market, and which can also maintain the shape, color and good resistance to the teeth even when it is immediately cooked without any excess treatment. As a result, the applicant has thus found that a softened food material can be produced by making a food material soft by the use of an enzyme after once freezing the food material and then thawing the same, or after freezing the food material and during thawing the same; and then subjecting the resultant food material to a heat-treatment for certainly inactivating the enzyme used and that the resulting softened food material can maintain its fixed and desired softness even after it is circulated on the market and further it is stored in a refrigerator of each home, and thus completed the present invention. In this connection, the applicant already filed a patent application concerning the foregoing invention as Japanese Patent Application No. 2006-239094 (corresponding to WO 2008/029783) (Patent Document 2).

Patent Document 1: JP-A-2003-284522;
Patent Document 2: WO 2008/029783.

### Disclosure of the Invention

### Problems That the Invention is to Solve

On the other hand, the inventors of this invention have conducted further investigation of the invention relating to the foregoing patent application and have found that the enzyme differs in its softening effect between the interior and the exterior of a vegetable food material depending on the kind of the food material. For instance, in case of food materials, which are rich, in particular, in the fibrous components such as burdocks and bamboo shoots, the softening of the exterior thereof is liable to easily or rapidly proceed when they are immersed in a dispersion containing the enzyme, while the softening of the interior of the fiber-rich food materials is liable to proceed slowly as compared with the external portion thereof. For this reason, if it is intended to sufficiently soften the fiber-rich food materials into the interior thereof, various problems have come into the open or the following problems arises: Such a food material is easily damaged from the external portions thereof due to the possible collision between the materials with the walls of the container during the circulation process, for instance, during carrying the same in a truck, since the exterior of the food materials is softened to an extreme degree and the shapes of the materials are thus impaired at the stage when the materials are distributed to final consumers.
Under such circumstances, the inventors of this invention have energetically conducted the studies to develop a means for preventing any damage of the shapes of food materials possibly encountered during the transportation or circulation thereof, and as a result, have found that a desired softened food material can be obtained by a method comprising the steps of allowing a vegetable food material, which has been removed from an enzyme-containing dispersion, to stand at a low temperature of not higher than 25 °C so that the enzyme reaction within the enzyme-treated food material would proceed at a slow rate and the both interior and exterior of the material could uniformly be softened and further storing the food material thus processed in a frozen state till it is finally distributed to the consumer, and the inventors have further found that the resulting food material can maintain its original shape, and that when the food material in the frozen state is subsequently subjected to, for instance, thawing and cooking operations under the consumer's care, the food material can provide, within a short period of time, a meal containing the food material which can still maintain its original shape and can easily be chewed within the mouth or the oral cavity. The inventors have thus completed the present invention on the basis of the foregoing findings. Patent Document 2 also touches an enzyme-treatment carried out at a relatively low temperature, for instance, 25°C, but the document never discloses such processes that after separating the food material from the enzyme-containing dispersion, the material is stored at a low temperature of not higher than 10°C to thus make the entire food material uniformly soften and that in the subsequent steps, the food material is prevented from undergoing any disintegration of the external portions thereof.

Accordingly, the present invention relates to a method for producing a frozen soft vegetable food material, which comprises steps of:
(1) a step for freezing a vegetable food ingredient and then thawing the food ingredient to thus form a thawed food ingredient;
(2) a step for immersing the thawed food ingredient in a dispersion containing a pectin-decomposition enzyme or a cellulose-decomposition enzyme under reduced pressure to form an enzyme-processed vegetable food ingredient;
(3) a step for removing the enzyme-processed vegetable food ingredient from the enzyme-containing dispersion;
(4) a step for subjecting the enzyme-processed vegetable food ingredient separated in the preceding step to a low temperature processing carried out at a temperature ranging from 0 to 10 °C for 8 to 24 hours to thus prepare a low temperature-processed vegetable food ingredient;
(5) a step for heating the low temperature-processed vegetable food ingredient at a temperature and for a time sufficient for the inactivation of the foregoing pectin-decomposition enzyme or the cellulose-decomposition enzyme; and
(6) a step for freezing the heat-treated vegetable food ingredient.

In this connection, the foregoing thawing operation included in the step (1) may likewise be carried out simultaneous with or in the course of the enzyme-treatment under reduced pressure in the foregoing step (2). Accordingly, in another embodiment, the present invention also relates to a method for producing a frozen soft vegetable food material, which comprises steps of:
(1) a step for preparing a frozen food ingredient by freezing a vegetable food ingredient;
(2) a step for preparing a thawed food ingredient by thawing the frozen food ingredient under reduced pressure while immersing the frozen food ingredient in a dispersion containing a pectin-decomposition enzyme or a cellulose-decomposition enzyme;
(3) a step for separating the enzyme-processed vegetable food ingredient from the dispersion;
(4) a step for preparing a low temperature-processed vegetable food ingredient by subjecting the separated enzyme-processed vegetable food ingredient to a low temperature-treatment at a temperature ranging from 0 to 10°C for 8 to 24 hours;
(5) a step for subjecting the immersed and thawed food ingredient to a heat-treatment at a temperature and for a time period sufficient for the inactivation of the pectin-decomposition enzyme or the cellulose-decomposition enzyme; and
(6) a step for freezing the heat-treated vegetable food ingredient.

### Best Mode for Carrying Out the Invention

The present invention will now be described in more detail below.
The vegetable food ingredients or materials capable of being used in the present invention include those abundant in fibrous materials such as burdocks and bamboo shoots. More specifically, burdocks may be listed as preferred examples of such vegetable food ingredients, among others.
In the present invention, it would be suitable that raw or unprocessed vegetable food ingredients are subjected to various pre-treatments such as the removal of contaminants such as soil; the washing thereof with, for instance, water; and/or the removal of the surface layer or the skin thereof, prior to freezing the same. Moreover, the vegetable food ingredients prior to its freezing are not restricted to raw or uncooked ones and may be ones subjected to a variety of pre-treatments such as a blanching treatment, a treatment for the removal of their harshness and a heat-treatment. In addition, it is preferred that the vegetable food ingredients are preferably subjected to the removal of their harshness which can be carried out by, for instance, immersing in water in an amount of 2 to 10 times the volume of the ingredients at a temperature, for instance, ranging from 75 to 95°C for a time period, for instance, ranging from 10 to 30 minutes, in order to inactivate the enzymes originated from the food ingredients and to soften the tissues thereof.

If the vegetable food ingredient is large, it is preferably cut or chopped into small pieces having a size of not larger than 50 mm and preferably not larger than 30 mm in order to ensure the subsequent penetration of an enzyme to the interior thereof. The original shape of the ingredient as a food material can be maintained in a meal like the usual one even in case of those having such a size and accordingly, the consumer can enjoy the meal.
The vegetable food material or ingredient is then subjected to a freezing and thawing treatments. In this respect, however, the thawing treatment can be carried out simultaneously with the next enzyme-treatment as will be detailed below.
The freezing is in general carried out under such conditions that the interior of the vegetable food ingredient can be frozen. For instance, the freezing temperature is not higher than -5°C, preferably not higher than -15°C and the freezing temperature, for instance, ranges from about -25°C to about -35°C. The freezing can be carried out within a time period ranging from about 10 to about 60 minutes while making use of, for instance, a quick freezer. The freezing operation is not restricted to any particular one such as a quick or slow freezing technique inasmuch as the freezing temperature is sufficient for forming ice crystals within the vegetable food ingredient. In this respect, however, the freezing temperature is suitably -20°C, while taking, into account, such a practical standpoint that the freezing is suitably completed within a relatively short freezing time or operating time. In addition, it is preferred to quickly carry out the freezing operation in order to make fine ice crystals uniformly distribute throughout the interior of the food ingredient. Alternatively, the use of a slow freezing operation would permit the formation of relatively large voids within the interior of the ingredient. The freezing time may vary depending on the freezing temperature selected and it usually ranges from about 20 to about 60 minutes when the freezing temperature is set at a level of not higher than -15°C. It is a matter of course that the food ingredient can be exposed to such a freezing temperature for a time period longer than that specified above.

The frozen vegetable food ingredient is thawed by allowing the same to stand at room temperature or by heating it up to a temperature of 50°C and preferably 30°C. The frozen vegetable food ingredient may likewise be thawed, while keeping the food ingredient in an enzyme-containing dispersion as will be detailed later, in particular, when it is intended to improve the thawing efficiency and to ensure the effective penetration of the enzyme into the interior of the ingredient.
In the meantime, the amount of moisture present on the surface of the frozen vegetable food ingredient suitably reduced by blowing cold air upon the same prior to the thawing operation since this may further improve the ability of the enzyme to penetrate into the material in the subsequent enzyme-treating step. This is suitable, in particular, when the thawing treatment is carried out simultaneous with the next step (2) wherein the enzyme-treatment is carried out under reduced pressure.
It is suitable in the present invention that the temperature of the cold air, for instance, ranges from -30°C to 5°C and preferably -20°C to 0°C.
The cold air-drying is in general carried out over a time period ranging from about 8 hours to about 3 days and preferably 10 hours to 2 days.
While the thawing time may vary depending on the thawing temperature selected, it ranges, for instance, from 5 to 30 minutes and, in general, it suitably ranges from about 5 to about 15 minutes. In this respect, however, if the thawing operation is carried out in the subsequent step (2), the thawing time period is in general identical to that required for the enzyme-processing time.

The vegetable food ingredient thus thawed is then immersed, under reduced pressure, in a dispersion containing a pectin-decomposition enzyme or a cellulose-decomposition enzyme.
If the thawed vegetable food ingredient is immersed in such an enzyme-containing dispersion under reduced pressure, the enzyme can easily penetrate into a large number of fine voids left in the interior of the vegetable food ingredient after the fine ice crystals distributed throughout the interior thereof have been extinguished through the fusion thereof. If the thawing is, in particular, carried out under reduced pressure, the surface of the frozen food is preliminarily dried by blowing the same with cold air. The reason of this would be considered to be as follows: when the fine ice crystals formed within the interior of the frozen food sublimate through the surface thereof under the reduced pressure conditions, the moisture present in the interior of the food can easily be replaced with the enzyme-containing dispersion since the surface of the frozen food is dried.

The higher the extent of the pressure reduction, the higher the rate of the penetration of the enzyme into the interior of the food. In this respect, however, the extent of the pressure reduction is practically limited by the power of the pressure-reduction apparatus available from the market and accordingly, it is thus suitable to set the extent of the practical pressure reduction at a level of, for instance, not higher than 93 hPa (70 mmHg) and in general ranging from 13 to 80 hPa (10 to 60 mmHg). It is desirable, in the present invention, that the pressure reduction time (the overall pressure reduction time starting from the initiation of the pressure reduction) ranges from 1 to 30 minutes, by way of example, and preferably about 5 to about 20 minutes. Incidentally, it would be understand that the enzyme penetrates even into the interior of the vegetable food ingredient almost the moment when the pressure reduction is initiated and thereafter the vegetable food ingredient is preferably removed from the enzyme-containing dispersion at the early stage of the immersion step or within a predetermined short period of pressure reduction time in order to prevent any premature softening of the exterior of the immersed food ingredient. However, the vegetable food ingredient may be maintained in the dispersion for a certain period of time in order to reduce the time required for ensuring the overall uniform softening of the food ingredient at a low temperature.

The pressure reduction time may variously vary depending on a variety of factors such as the extent of the pressure reduction, the pressure-reduction speed, the immersion period during which the food ingredient is kept in the enzyme-containing dispersion, but it would be practical and sufficient that the pressure reduction time is set at a level, for instance, ranging from about 5 to about 20 minutes and, in particular, about 5 to about 10 minutes.
The enzymes used in the enzyme-containing dispersion are, for instance, pectin-decomposition enzymes (pectinases) or cellulose-decomposition enzymes (cellulases).
The pectin-decomposition enzyme is not restricted to any particular one and more specifically it is not limited in the kinds of origins such as microorganisms from which it is derived, insofar as it can hydrolyze pectin. Specific examples thereof or examples of commercially available ones include Macellozyme 2A (containing 39% of pectinase incorporated therein, available from Yakult Pharmaceutical Industry Co., Ltd.), Sumizyme SPG (available from Shin-Nippon Chemical Industry Co., Ltd.) and Pectolyase (containing 10% pectinase).
The cellulose-decomposition enzyme used in the present invention is not limited, in particular, in the kinds of origins such as microorganisms from which it is derived, insofar as it can hydrolyze cellulose. Specific examples thereof as commercially available ones, which can suitably be used herein, include Cellulase Y-NC or the like.
In this connection, it has been found that the incorporation of citric acid into the enzyme-containing dispersion may accelerate the softening of the vegetable food ingredient. In this respect, it is sufficient that citric acid is incorporated into the enzyme-containing dispersion in a concentration, for instance, ranging from about 0.05 to about 0.5%.

The concentration of the enzyme-containing dispersion is not restricted to any specific one, but it is desirable that the concentration thereof in general ranges from 0.1 to 4.0% by mass and preferably 0.2 to 2.0% by mass. The medium to be used in the dispersion is usually water, but a buffering agent such as a phosphoric acid salt may be added thereto so that the pH value of the dispersion stably falls within the optimum pH range for each particular enzyme used.
It is desirable that the immersion temperature in general ranges from 10 to 50°C and preferably 25 to 40°C. The immersion time period may vary depending on the immersion temperature used, but it is suitable that the immersion time is, for instance, set at a level ranging from about 2 to about 15 minutes and preferably about 3 to about 10 minutes.

After the completion of the immersion step, the enzyme-containing dispersion is removed from the vegetable food ingredient. This would certainly permit the prevention of any softening of the exterior of the food ingredient, which can rapidly proceed as compared with the softening of the interior thereof and this would accordingly ensure the uniform softening of the entire vegetable food ingredient.
Thus, the enzyme can penetrate into the interior of the food ingredient and then the vegetable food ingredient is removed from the enzyme-containing dispersion. Thereafter, the vegetable food ingredient is stored in a thermostatic chamber such as a refrigerator at a low temperature usually ranging from 0 to 15°C and preferably 4 to 10°C so that the entire vegetable food ingredient is gradually and uniformly softened till the vegetable food ingredient has a desired softness. The time period required for the storage is herein defined to be one required for achieving the desired softness and it in general ranges from 8 to 24 hours and preferably 10 to 16 hours. For instance, it ranges from about 12 to about 16 hours when the storage temperature is set at 10°C.

Then, the vegetable food ingredient which has entirely and uniformly been softened is heated to prevent the enzyme from further affecting on the ingredient and to thereby inactivate the enzyme. The softness of the vegetable food ingredient thus treated can be confirmed on the basis of the calibration curve preliminarily prepared by examining the interrelation between the treating time and the softness of the resulting food ingredient.
The deactivation of such an enzyme is, for instance, carried out by heating the resulting soft vegetable food ingredient, while it is immersed in water. Regarding the immersion of the soft vegetable food ingredient in water, the water is in general used in an amount of about 5 to about 20 times and preferably about 5 to about 10 times the volume of the food ingredient to be immersed in water. The heat-treatment for the deactivation of the enzyme is carried out, for instance, at a temperature on the order of 60°C to 99°C and preferably 75°C to 95°C. Moreover, the deactivation may likewise be carried out by heating the food ingredient while bringing the water to a boil. Furthermore, the heating time period may vary depending on the heating temperature used, but it ranges, for instance, from 5 to 20 minutes and preferably about 5 to about 10 minutes. Incidentally, an alkaline agent such as sodium carbonate can be used in combination with the foregoing heating treatment to thus adjust the pH value of the vegetable food ingredient.
The deactivation of the enzyme may be carried out by introducing the resulting soft vegetable food ingredient into a container used for heating. Such a container for heating may be, for instance, a retort oven, or a simple container or pot to which hot water is previously added. In this respect, however, the retort oven is herein listed in such a meaning that it can be used for the sake of convenience and it is in general used under uncompressed conditions. However, this never means the exclusion of the use of such a retort oven under compression.

The enzymatically softened vegetable food ingredient thus obtained is subjected to a freezing treatment prior to or after packaging it in a container such as a bag prepared from, for instance, resin materials such as polyethylene, polypropylene or composite materials prepared from the same, laminated materials made of the same which may have a metal layer such as an aluminum layer inserted between the layers of the laminate or applied onto the surface thereof for the purpose of reducing any damage of the shape of the food ingredient or material to be packed therein as low as possible during the circulation process and then put into circulation.
The freezing is, for instance, carried out at a temperature ranging from -40°C to -18°C and preferably -30°C to -20°C.
The frozen and softened vegetable food material is transferred, through distribution channels, to common prospective buyers, consumers, processors or the like, in which it is thawed and used for food without any further treatment or after passing through some additional processing steps such as cooking.

For instance, the aged purchases such a frozen and softened vegetable food material on the market and he can prepare his favorite meal using the same in his own house. In particular, the time period required for cooking the food material can considerably be reduced since the material is preliminarily softened food ingredient. The cooking time thereof can arbitrarily be controlled, in his own house so that the softness of the ingredient reaches the desired and favorite level favorable for each consumer.
The softness level of the food material, which can easily be crushed by the aged through the action of his tongue and can easily be chewed, corresponds to 3000 to 10000 N/m² as expressed in terms of the value as determined by the use of Texturometer manufactured and sold by TAKEMOTO Company.
The hardness of a food ingredient is in general reduced through cooking operations such as heating or boiling, but there are some exceptions. The softness of the food ingredient observed when the enzyme is inactivated suitably ranges from 20,000 to 250,000 N/m² (2.0 × 10⁴ to 2.5 × 10⁵ N/m²) and preferably 20,000 to 200,000 N/m² (2.0 × 10⁴ to 2.5 × 10⁵ N/m²) as expressed in term of the values as determined by the use of Texturometer manufactured and sold by TAKEMOTO Company.

### Examples

Now, the present invention will hereunder be described in more detail with reference to specific Examples, but it should be noted that the following Examples are those simply illustrating the present invention and the scope of the present invention is not limited to these specific Examples at all.

### Example 1 (Preparation of Frozen Food (cooked burdocks))

### Pretreatment of Burdocks

Raw burdocks which had been washed with water and whose skin had been removed (the hardness of raw burdocks was found to be 3.8 × 10⁶ N (as determined by the use of Texturometer manufactured and sold by TAKEMOTO Company)) were chopped or cut along the longitudinal direction thereof into small pieces each having a length ranging from 5 to 30 mm.

### Heat-Treatment

The chopped raw burdocks were heated at 90°C for 30 minutes while they were immersed in water in an amount of 8 times the volume of the chopped raw burdocks.

### Freezing Treatment

After the chopped raw burdocks were removed from the immersion water (water-drainage), they were cooled with water and then frozen at -20°C for 40 minutes using a quick freezer. Thus, ice crystals were formed within the tissue of the burdock. Then, the quantity of the moisture present on the surface of the chopped burdock in its frozen state was reduced by blowing cold air (-20°C) onto the surface of thereof for 48 hours to thus improve the penetration of an enzyme into the tissue of the burdock.

### Preparation of Enzyme-Containing Dispersion

Macellozyme 2A (containing 39% of pectinase incorporated therein, available from Yakult Pharmaceutical Industry Co., Ltd.) was blended with and dispersed in water to thus form an enzyme-containing dispersion having an enzyme concentration of 0.3%.

### Enzyme-Impregnation Treatment

The frozen and chopped burdocks were immersed in the 0.3% enzyme-containing dispersion in an amount of 3 times the volume of the burdocks, followed by the initiation of the reduction of pressure and the continuation of the pressure-reducing operation at a pressure ranging from 0 to 80 hPa (0 to 60 mmHg) over 20 minutes.

### Treatment with Enzyme to Cause Enzyme Reaction

The enzyme-treated burdocks were then released from the reduced pressure, removed from the enzyme-containing dispersion (drainage of the dispersion) and subsequently allowed to stand for 16 hours in a refrigerator maintained at 10°C. At this stage, the hardness of the burdock was found to be 1.8 × 10⁵ N (the value as determined using Texturometer manufactured and sold by TAKEMOTO Company)).

### Enzyme-Deactivation Treatment

The burdocks, which had been subjected to the enzyme-treatment at a low temperature, were heated at 95°C for 10 minutes while they were immersed in water in an amount of 3 times the volume of the burdocks to thus inactivate the enzyme.

### Freezing Treatment

The resulting enzyme-treated burdocks were subjected to cooling operations in a vacuum and then frozen at -40°C for 30 minutes. This would permit the removal of any excess moisture, the instantaneous freezing of the burdocks would improve the handling thereof such as packaging and the resulting product would be prevented from being damaged. Moreover, the frozen goods do not lose their original shape even during the circulation process and the thawing of the same surely provides a soft burdock food.

### Reference Example 1

The foregoing frozen food was cooked. More specifically, the frozen burdocks were naturally thawed, followed by the addition of commercially available soup stock for cooking to the thawed burdocks and the heat treatment thereof at about 85°C for about 5 minutes. The resulting burdock was found to have a hardness of 4.5 × 10⁴ N/m². This hardness level is lower than the reference value: 5.0 × 10⁴ N/m² for the foods for persons who suffer from the difficulty of mastication as one of the special nutritious foods specified in Ministry of Health, Welfare and Labor of Japan. More specifically, the resulting burdock was found to be sufficiently soft and the aged could quite easily masticate the same and the burdock firmly maintained its original shape.

## Claims

1. A method for producing a frozen soft vegetable food material comprising steps of:
(1) a step for freezing a vegetable food ingredient and then thawing the food ingredient to thus form a thawed food ingredient;
(2) a step for immersing the thawed food ingredient in a dispersion containing a pectin-decomposition enzyme or a cellulose-decomposition enzyme under reduced pressure to form an enzyme-processed vegetable food ingredient;
(3) a step for removing the enzyme-processed vegetable food ingredient from the enzyme-containing dispersion;
(4) a step for subjecting the enzyme-processed vegetable food ingredient separated from the dispersion in the preceding step to a low temperature processing carried out at a temperature ranging from 0 to 10°C for 8 to 24 hours to thus prepare a low temperature-processed vegetable food ingredient;
(5) a step for heating the low temperature-processed vegetable food ingredient at a temperature and for a time sufficient for the inactivation of the foregoing pectin-decomposition enzyme or the cellulose-decomposition enzyme; and
(6) a step for freezing the heat-treated vegetable food ingredient.

2. A frozen soft vegetable food ingredient produced according to the method as set forth in claim 1.

3. A method for producing a frozen soft vegetable food material comprising steps of:
(1) a step for preparing a frozen food ingredient by freezing a vegetable food ingredient;
(2) a step for preparing a thawed food ingredient by thawing the frozen food ingredient under reduced pressure while immersing the frozen food ingredient in a dispersion containing a pectin-decomposition enzyme or a cellulose-decomposition enzyme;
(3) a step for separating the enzyme-processed vegetable food ingredient from the dispersion;
(4) a step for preparing a low temperature-processed vegetable food ingredient by subjecting the separated enzyme-processed vegetable food ingredient to a low temperature-treatment at a temperature ranging from 0 to 10°C for 8 to 24 hours;
(5) a step for subjecting the immersed and thawed food ingredient to a heat-treatment at a temperature and for a time period sufficient for the inactivation of the pectin-decomposition enzyme or the cellulose-decomposition enzyme; and
(6) a step for freezing the heat-treated vegetable food ingredient.

4. A frozen soft vegetable food ingredient produced according to the method as set forth in claim 3.
